# EUROPÄISCHE PATENTSCHRIFT

(11) **EP 0 516 808 B1**
(45) Veröffentlichungstag und Bekanntmachung des Hinweises auf die Patenterteilung: **24.01.1996**
(21) Anmeldenummer: 92902538.5
(22) Anmeldetag: 19.11.1991
(51) Int. Cl.: H04R 25/00

(54) **VERFAHREN ZUM HERSTELLEN VON INDIVIDUELL AN DIE KONTUREN EINES OHRKANALS ANGEPASSTEN OTOPLASTIKEN ODER OHRPASSSTÜCKEN**
METHOD OF PREPARING AN OTOPLASTY OR ADAPTIVE EAR PIECE INDIVIDUALLY MATCHED TO THE SHAPE OF AN AUDITORY CANAL
PROCEDE DE REALISATION D'OTOPLASTIES OU DE PIECES D'AJUSTEMENT OTIQUES ADAPTEES INDIVIDUELLEMENT AUX CONTOURS D'UN CONDUIT AUDITIF

(30) Priorität: 21.12.1990 DE 4041105
(43) Veröffentlichungstag der Anmeldung: 09.12.1992
(73) Patentinhaber: TOPHOLM & WESTERMANN APS, DK-3500 Vaerloese (DK)
(72) Erfinder: TÖPHOLM, Jan, DK-2840 Holte (DK); WESTERMANN, Soeren, DK-2900 Hellerup (DK); ANDERSEN, Svend, Vittig, DK-3060 Espergaerde (DK)
(74) Vertreter: Böhmer, Hans Erich, Dipl.-Ing.
(86) Internationale Anmeldenummer: EP9102182
(87) Internationale Veröffentlichungsnummer: WO9211737

(56) Entgegenhaltungen:
- EP-A- 0 091 876
- EP-A- 0 398 237
- US-A- 4 663 720
- PATENT ABSTRACTS OF JAPAN vol. 11, no. 212 (E-522)(2659) 9. Juli 1987 & JP,A,62
- 032 800 ( RION CO LTD ) 12. Februar 1987 siehe Zusammenfassung

## Beschreibung

Die Erfindung betrifft ein Verfahren zum computergesteuerten Herstellen von individuell an die Konturen des Ohrkanals angepaßten, einteiligen oder aus mehreren getrennt voneinander bearbeitbaren Teilen bestehenden Otoplastiken oder Ohrpaßstücken durch direktes oder indirektes Erfassen der inneren Konturen des Ohrkanals, beispielsweise durch Abnehmen eines Ohrabdruckes und Umwandeln der so ermittelten Werte in eine digitale Darstellung und geht aus von EP-A-0 398 237.

Wenn heutzutage ein Ohrpaßstück oder vor allem eine Otoplastik für ein Im-Ohr-Hörgerät individuell angefertigt werden soll, so ist dazu eine große Anzahl von Verfahrensschritten erforderlich, die sehr zeitraubend und arbeitsintensiv und damit teuer sind.

Dabei müssen folgende Arbeiten im wesentlichen manuell ausgeführt werden:
1.Abnehmen eines oder mehrerer Ohrabdrücke beim Patienten;
2. Bearbeiten des Ohrabdruckes für die Herstellung einer Gießform. Dazu muß überschüssiges Material von dem Ohrabdruck entfernt werden und kleine Fehler in dem Ohrabdruck müssen ausgebessert werden, einige Teile des Ohrabdruckes müssen zudem noch vergrößert werden. Schließlich muß der Ohrabdruck zum Glätten der Oberfläche in ein Wachs oder eine ähnliche Flüssigkeit eingetaucht werden.
3.Anschließend wird aus dem Ohrabdruck eine Gießform hergestellt, die beispielsweise aus Gips, einem Gel oder Silikonharz bestehen kann.
4.Ein polymerisierbares flüssiges Kunstharz wird in der gewünschten Mischung hergestellt, in die Form gegossen und mindestens zum Teil polymerisiert. Wenn das Produkt eine Schale für ein individuell zugerichtetes Im-Ohr-Hörgerät ist, dann muß der größte Teil des flüssigen Kunstharzes aus der Form wieder ausgegossen werden, bevor es vollständig polymerisiert.
5. Beim Herausnehmen des Gußkörpers aus der Form wird diese dadurch normalerweise zerstört.
6. Das Ohrpaßstück oder die Otoplastik wird anschließend auf die richtige Größe und das erforderliche Aussehen abgeschliffen.
7.Normalerweise muß dann noch ein Entlüftungskanal hergestellt werden, was in verschiedener Weise erfolgen kann.
8. Schließlich ist eine Schallaustrittsöffnung durch Bohren herzustellen.
9. Am Schluß muß das Ohrpaßstück oder die Otoplastik noch poliert werden :
Wenn der Gußkörper für ein Im-Ohr-Hörgerät bestimmt ist, muß eine weitere Anzahl von Verfahrensschritten durchgeführt werden :
10.Es muß sichergestellt werden, daß für die Bauelemente des Hörgerätes (Mikrofon, Verstärker, Batterie, Lautstärkesteller, Hörer usw.) ausreichend Platz vorhanden ist.
11. Der Hörer muß so tief als möglich in den im Ohrkanal liegenden Abschnitt der Otoplastik eingebracht und befestigt werden. Oft genug ist dort sehr wenig Platz, um sowohl den Hörer als auch den Entlüftungskanal, der normalerweise kreisförmigen Querschnitt aufweist, in dem Teil der Otoplastik unterzubringen, der tief im Ohrkanal liegt.
12.Außerdem sollte irgendwo innerhalb der Otoplastik eine Telefonspule untergebracht werden.
13. Außerdem kann es vorkommen, daß das Mikrofon ebenfalls ganz individuell angeordnet werden muß.
14. Schließlich muß die Deckplatte an der Otoplastik befestigt werden, sei es durch Verkleben oder durch Polymerisieren.

Insgesamt besteht also dieses normalerweise angewandte Verfahren aus einer großen Anzahl von manuellen Verfahrensschritten, die sehr viel Zeit benötigen und trotzdem eine Reihe von Ungewißheiten mit sich bringen, da viele der Schritte schwer zu überwachen und zu kontrollieren sind. Als Beispiel diene dabei die Wandstärke und der Innenraum einer Otoplastik für Im-Ohr-Hörgeräte, die bei Verwendung des manuellen Verfahrens oft von den gewünschten Werten abweichen. Dabei kann es vorkommen, daß überflüssiges Material aus dem Innenraum mit einem in der Dentaltechnik verwendeten Bohrer oder einer Schleifscheibe abgetragen werden muß, um ausreichenden Raum für den Hörer, den Entlüftungskanal usw. zu schaffen. Selbst dieses Verfahren ist jedoch nicht gut definiert und liefert praktisch kaum vorhersehbare Ergebnisse.

Es sind daher bereits viele Versuche unternommen worden, um dieses Problem zu lösen, weil die nach diesen Verfahren hergestellten Im-Ohr-Hörgeräte meist von schlechter Qualität und als Erzeugnis von schwer vorhersehbaren Eigenschaften waren.

Modulare Im-Ohr-Hörgeräte, bei denen ein Modul, das alle Bauelemente des Hörgerätes bereits enthält, in eine individuell gefertigte Otoplastik eingeformt wird, haben sich als nicht sonderlich erfolgreich erwiesen, wohl zum Teil deshalb, weil sie normalerweise etwas größer sind. Das kommt daher, daß die Bauelemente innerhalb des Moduls in einer festen vorgegebenen Position angeordnet sind. Außerdem sahen diese Geräte oft mehr wie Verbund- oder Hybridgeräte aus.

Aus den patent abstracts of Japan, Band 11 Nr. 212 vom 9.7.1987 ist die Herstellung eines Ohrabdruckes und die Ermittlung der dreidimensionalen digitalen Daten dieses Ohrabdruckes sowie deren Übertragung an einen anderen Ort bekannt, mit anschließender Speicherung der Daten. Diese werden anschließend zur numerischen Steuerung einer Fräsmaschine zur Herstellung e iner identischen Kopie des Ohrabdruckes verwendet. Dies betrifft also nur eine Herstellung einer Replik eines Ohrabdruckes.

Aus der EP - A-0 398237 ist ein Verfahren zur Herstellung von Im-Ohr-Hörgeräten bekannt, bei dem zunächst die inneren Konturen eines Ohrkanals durch Laserabtastung erfaßt und in eine dreidimensionale digitale Darstellung umgewandelt werden.

Diese Daten dienen der numerischen Steuerung einer Fräsmaschine, auf der vorgefertigte Kunststoffblöcke, die bereits alle Bauelemente eines Hörgerätes fest eingegossen enthalten, auf die dem Ohrkanal entsprechende Form abgefräst werden. Für verschiedene Größen von Geräten wird eine Anzahl unterschiedlicher Blöcke oder Rohlinge vorgehalten. Dieses Verfahren ist jedoch in Bezug auf die optimale Anordnung der Bauelemente und die optimale Ausnutzung des Innenraumes wenig geeignet und nicht sehr flexibel.

Aufgabe der vorliegenden Erfindung ist es:
1.die Herstellung von individuell angepaßten Ohrpaßstücken von Im-Ohr-Hörgeräten bzw. Otoplastiken vollständig oder nahezu vollständig zu automatisieren;
2.eine optimale Ausnutzung des im Ohrkanal und im äußeren Ohr zur Verfügung stehenden Raumes mit dem Ergebnis, daß damit das kleinstmögliche Hörgerät hergestellt werden kann;
3.Sicherstellung einer Optimierung von Position und Form aller internen Funktionen und Bauelemente eines Im-Ohr-Hörgerätes und
4.Beschreibung von Verfahren zur Herstellung von gut definierten Hörgeräten und Ohrpaßstücken von ständig gleichbleibender Qualität, die gleichzeitig auch vom kosmetischen Standpunkt aus besonders gut aussehen.

Diese der Erfindung zugrundeliegende Aufgabe wird erfindungsgemäß prinzipiell gelöst durch die Umwandlung dieser digitalen Darstellung der Konturen des Ohrkanals in ein multidimensionales, vorzugsweise dreidimensionales Computermodell der äußeren Konturen der Otoplastik oder des Ohrpaßstückes mit Auswahl der verschiedenen Bauelemente/Funktionen für den Innenraum des Computermodells bei gleichzeitiger Festlegung der Wandstärke und Optimierung der Positionen der Bauelemente/Funktionen bezüglich optimaler Funktion und minimaler Größenabmessungen in diesem Innenraum, und anschließende computergesteuerte Herstellung der Otoplastik oder des Ohrpaßstückes aus den so ermittelten Daten der optimierten dreidimensionalen Computerdarstellung der Otoplastik oder des Ohrpaßstückes.

Die Erfindung wird nunmehr anhand verschiedener Ausführungsbeispiele, denen allen die ersten drei Abschnitte der prinzipiellen Lösung im Wesentlichen gemeinsam sind, in Verbindung mit den beigefügten Zeichnungen im einzelnen näher erläutert.

In den Zeichnungen zeigen:
- Fig. 1: eine Querschnittsansicht eines Im-Ohr-Hörgerätes;
- Fig. 2: schematisch eine Querschnittsansicht eines Ohrpaßstückes;
- Fig. 3: ein Flußdiagramm oder Ablaufdiagramm der Verfahrensschritte gemäß Anspruch 1;
- Fig. 4: ein Flußdiagramm des Verfahrens gemäß Anspruch 1 - 3;
- Fig. 5: durch Abtastung ermittelte Darstellungen einzelner Querschnitte eines Ohrabdruckes;
- Fig. 6: Computerdarstellung von durch Abtastung gewonnenen Querschnittsebenen;
- Fig. 7: Darstellung der äußeren Oberfläche einer Otoplastik als dreidimensionales Modell, daß nach dem Verfahren der finiten Elemente ermittelt wurde;
- Fig. 8: Darstellung des dreidimensionalen Computermodells der Otoplastik mit bereits ermittelter Wandstärke zur Definition des Innenraums an der inneren Oberfläche;
- Fig. 9: Ablaufdiagramm gemäß dem Verfahren nach Ansprüchen 17 und 18;
- Fig. 10: Ablaufdiagramm des Verfahrens gemäß den Ansprüchen 23, 24, 27; durch Herstellen von Querschnittsflächen und Stapeln dieser Scheiben übereinander;
- Fig. 11: Ablaufdiagramm des Extrusionsverfahrens gem.Anspruch 28;
- Fig. 12: Prinzipdarstellung des Aufbaus einer Otoplastik oder eines Ohrpaßstückes nach dem Extrusionsverfahren;
- Fig. 13: Ablaufdiagramm eines subtraktiven Verfahrens zur Darstellung sowohl der inneren als auch der äußeren Konturen einer Otoplastik oder eines Ohrpaßstückes;
- Fig. 14: Formgebung der äußeren Konturen von Blocks mit vorgefertigtem Innenraum als Ablaufdiagramm;
- Fig. 15: Prinzipdarstellung des subtraktiven Mehrblockverfahrens;
- Fig. 16: Schematisch zwei fertiggestellte Teile einer Otoplastik
- Fig. 17: Schematisch für das subtraktive Verfahren zu verwendende im Innenraum vorgefertigte Teile oder Blöcke für eine Otoplastik.

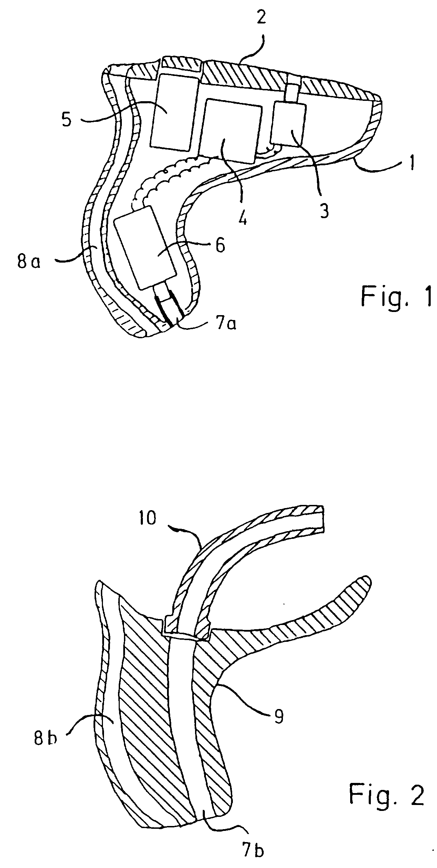

Fig. 1 zeigt reinchematisch ein Im-Ohr-Hörgerät mit einer Schale oder Otoplastik 1, die mittels einer Deckplatte 2 verschlossen ist. Das Hörgerät enthält ein Mikrofon 3, ein elektronisches Verstärkerteil 4, eine Batterie 5, einen Hörer 6 und schließlich einen Schallausgangskanal 7a sowie einen Druckausgleichs- oder Entlüftungskanal 8a.

Fig. 2 zeigt ein Ohrpaßstück oder eine Ohrolive 9, mit einem zu einem Hörgerät (nicht gezeigt) führenden Schallschlauch 10, einem Schallausgangskanal 7b und einem Entlüftungskanal 8b.

Im Prinzip ist das Fertigungsverfahren für beide Ausführungsformen im wesentlichen gleich, wenn man davon absieht, daß im einen Falle (Hörgerät) noch Bauelemente enthalten sind, im anderen Fall normalerweise aber nicht.

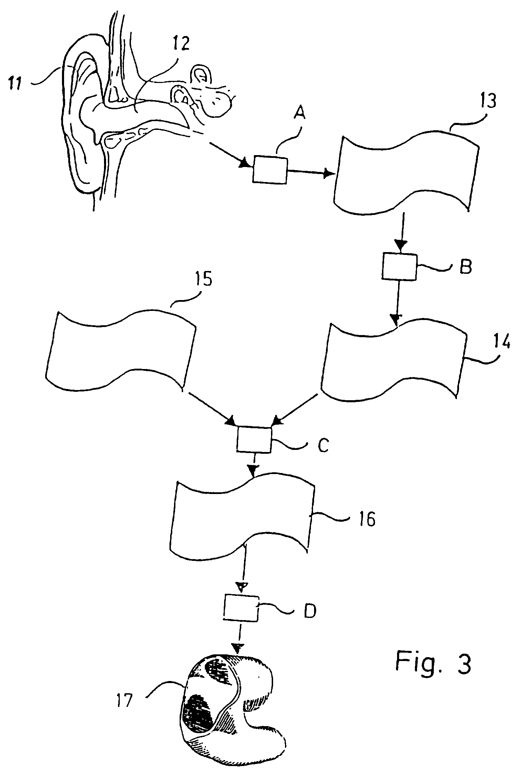

Aus Fig. 3 geht das generelle Prinzip der Erfindung hervor. Ein schematisch dargestelltes Ohr 11 weist einen Ohrkanal 12 auf, dessen Konturen ermittelt werden sollen. Dies kann sowohl statisch als auch dynamisch erfolgen. Darauf wird noch eingegangen werden.

Im Fall der Fig. 3 werden die Konturen des Ohrkanals bei A ermittelt und in einer Datenbank 13 digital gespeichert. Diese digitalen Daten werden bei B in ein dreidimensionales Computermodell der Otoplastik umgewandelt und in einem Datenspeicher 14 gespeichert. In einer weiteren Datenbank 15 sind alle Bauelemente /Funktionen für Im-Ohr-Hörgeräte bzw. Ohrpaßstücke gespeichert. Darunter ist zu verstehen, daß alle verfügbaren Bauelemente und Funktionen bezüglich ihrer Abmessungen und Leistungsdaten in dieser Datenbank abrufbar enthalten sind, also auch verschiedene Größen von Hörern, Mikrofonen, Verstärkerteilen, Batterien usf. Diese Datenbank wird man, wenn sie nicht bereits vorhanden ist, anlegen und auch ständig auf dem neuesten Stand halten und ergänzen bzw. modernisieren.

Die in den Datenbanken 14 und 15 gespeicherten Daten werden dann bei C dazu benutzt, die notwendigen Funktionen/Bauelemente in das dreidimensionale Computermodell, z.B. eines Im-Ohr-Hörgerätes, in optimaler Weise einzufügen. Dadurch erhält man ein vollständiges Modell der Otoplastik oder des Ohrpaßstückes im Speicher 16, der auch ein Teil einer allgemeinen Datenbank sein kann. Anhand dieses im Computer gespeicherten Modells der Otoplastik oder des Ohrpaßstückes wird dann in einem computergesteuerten Fertigungsverfahren D die Otoplastik 17 erzeugt, die dann noch in der üblichen Weise nachbehandelt wird. Selbstverständlich gilt dies auch für ein Ohrpaßstück .

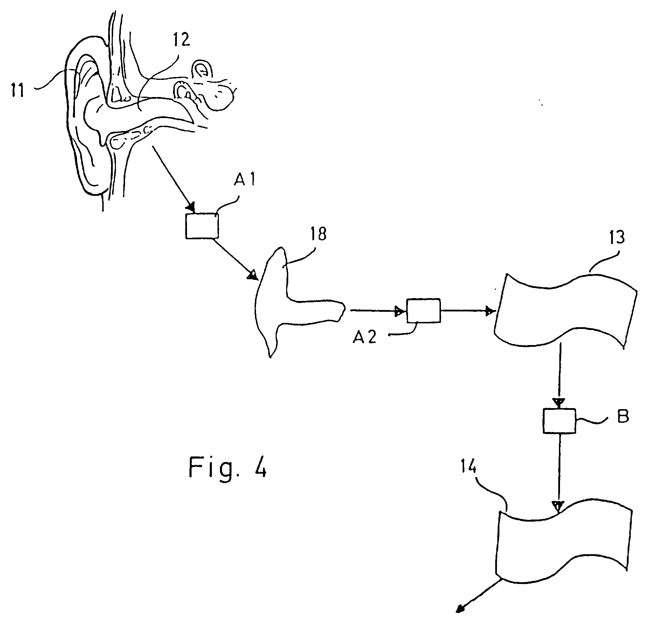

Ein statisches Verfahren zur Erfassung der Konturen eines Ohrkanals zeigt im Prinzip Fig. 4. Vom Ohr 11 mit seinem Ohrkanal 12 wird bei A1 ein Ohrabdruck 18 abgenommen, dessen Abmessungen bei A2 digitalisiert und in einem Speicherbereich 13 gespeichert werden. Diese Daten werden wie zuvor bei B in ein dreidimensionales Computermodell umgewandelt und bei 14 in einer Datenbank abgespeichert.

Die Umwandlung der Konturen des Ohrabdruckes kann in der verschiedensten Weise erfolgen. Beispielsweise lassen sich die Konturen des Ohrabdruckes mittels einer den Ohrabdruck durchdringenden Strahlung, z.B. Röntgenstrahlung, oder Ultraschall zerstörungsfrei abnehmen und dabei beispielsweise in gleichmäßigen aufeinanderfolgenden Querschnittsebenen abtasten. Die äußeren Konturen des Ohrabdruckes können auch mit Hilfe von Laserinterferometrie ermittelt werden.

Eine weitere praktische Möglichkeit besteht darin, den Ohrabdruck in aufeinanderfolgenden Schritten in dünne Schichten zu zerteilen oder zu zerschneiden und deren Abmessungen z.B. mit einer Videokamera zu erfassen.

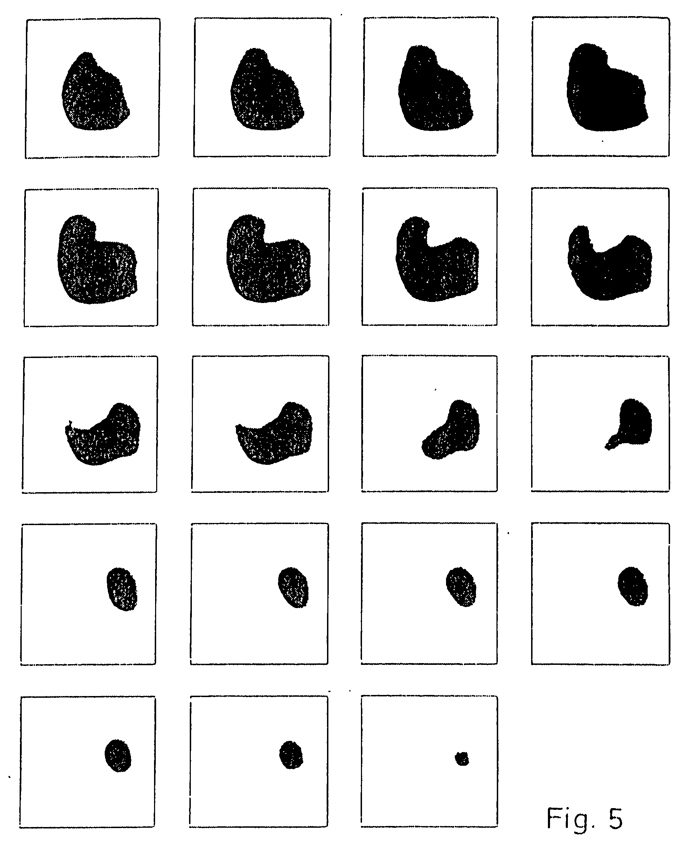

Diese Verfahren lassen sich noch dadurch verbessern, daß man den Ohrabdruck in einen kontrastfarbigen Kunststoffblock einbettet. Damit wird die Erfassung der Konturen sowohl bei der zerstörungsfreien Abtastung als auch beim Zerschneiden verbessert. Diese Querschnitte können dabei etwa so aussehen wie in Fig. 5 gezeigt. Es ist dabei anzumerken, daß die Schnitte oder Querschnittsebenen nicht gleichmäßig aufeinanderfolgende Abstände oder gleichförmige Schichtdicken aufweisen müssen. Es genügt, wenn ein neuer Querschnitt nur dann ermittelt wird, wenn er sich von dem vorhergehenden Querschnitt um vorbestimmte minimale Abmessungen unterscheidet.

Schließlich ist es auch möglich, von dem Ohrabdruck nacheinander in aufeinanderfolgenden Schritten dünne Schichten gleichmäßiger oder ungleichmäßiger Dicke abzufräsen oder abzuschleifen und dann die jeweils entstandene Oberfläche zu erfassen und digital zu speichern.

Die Konturen des Ohrkanals lassen sich aber auch durch berührungslose Abtastung, z.B. durch Ultraschall, erfassen. In diesem besonderen Fall läßt sich sogar eine dynamische Erfassung der Konturen des Ohrkanals erreichen.

An sich ist die Erfassung der Konturen des Ohrkanals räumlich zu sehen, d.h. in einem den Innenraum des Ohrkanals erfassenden und beschreibenden mehrdimensionalen Erfassungssystem. Da sich jedoch die Konturen des Ohrkanals beim Sprechen, Essen, Trinken usw. verändern, erhält man bei dieser Art von Datenerfassung der Konturen des Ohrkanals mit der Zeit variierende Abtastwerte (also eine vierte Variable) und kann dann diese sich ändernden Konturen mit berücksichtigen. Damit kann man eine noch optimalere Form der Otoplastik oder des Ohrpaßstückes erreichen, als mit dem statischen Verfahren.

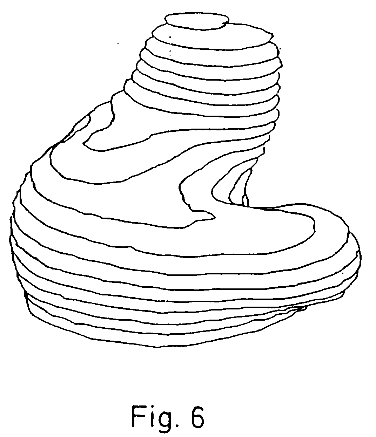

Fig. 6 zeigt dann eine Computerdarstellung von durch Abtastung gewonnenen Querschnitten .

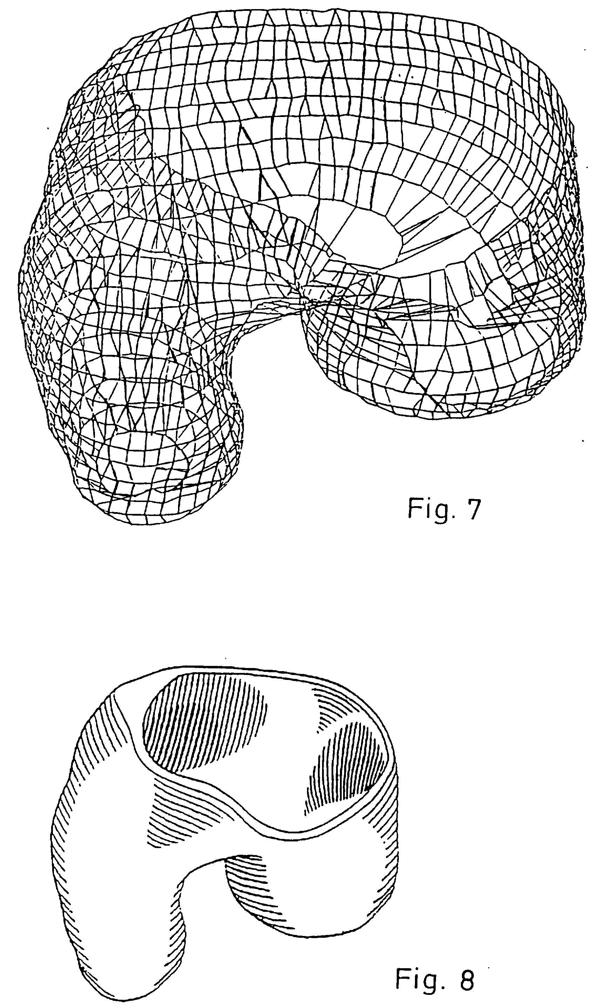

Hat man die digitalisierten Daten des Ohrkanals im Speicher, dann beginnt man mit der Umwandlung dieser Daten mittels aus der CAD/CAM-Technik bekannten Algorithmen in eine dreidimensionale Computerdarstellung der äußeren Konturen der Otoplastik oder des Ohrpaßstückes, z.B. nach dem Verfahren der finiten Elemente. Dies zeigt schematisch Fig. 7.(vgl. dazu Fig. 3, Ziffer 14, 15 und 16 sowie C) In diesem Zusammenhang kann dann sofort die Mindestwandstärke definiert werden, die gleichzeitig die äußerste Begrenzungsfläche für die Bauelemente/Funktionen und deren optimale Anordnun g darstellt. Dies zeigt, ebenfalls in einer Computerdarstellung, die Fig. 8.

Diese Umwandlung kann selbstverständlich interaktiv oder voll computergesteuert durchgeführt werden. Danach müssen die Kammern für den Hörer und den Ausgleichskanal festgelegt werden, wobei man dem Ausgleichskanal entweder einen gleichförmigen Querschnitt oder für eine Tiefpaßfilterwirkung einen abgestuften, vorzugsweise mehrfach abgestuften Querschnitt gibt, diesen digitalisiert und im dreidimensionalen Computermodell in seinem Verlauf darstellt. Das Programm könnte dann den Verlauf des Ausgleichskanals den gegebenen Verhältnissen anpassen, um den im Innenraum der Otoplostik verfügbaren Raum dafür optimal auszunützen. Die Hörerkammer kann dann der Datenbank 15 entnommen werden oder einer Datenbank-Bibliothek dreidimensionaler Modelle und unterschiedlicher Funktionen. Damit kann z.B. der Hörer so tief als möglich in das innere Ende der Otoplastik hineingezogen werden. Dabei muß man aber, ebenfalls computergesteuert, überprüfen, ob denn der Hörer, wenn er schließlich in das Gerät eingesetzt werden soll, sich auch problemlos bis an das am weitesten im Ohrkanal innen liegende Ende der Otoplastik einführen läßt.

In gleicher Weise kann der Verstärkerblock, die Mikrofonkammer und ggf. eine Telefonspulenkammer aus der Datenbank für Bauelemente/Funktionen ausgewählt und interaktiv oder automatisch in eine optimale Position innerhalb der Otoplastik gebracht werden.

Wenn alle Funktionen/Bauelemente im dreidimensionalen Computermodell, also nicht körperlich, an ihrem optimalen Platz angeordnet sind, dann kann es erforderlich sein, hier und da etwas "Material" einzufüllen, um eine spätere ordnungsgemäße Herstellung sicherzustellen. Für einige Herstellungsverfahren kann es auch erforderlich sein, eine Anzahl von Stützteilen vorzusehen, die zunächst die Herstellung erleichtern, später aber wieder entfernt werden müssen.

Ausgehend von dem im Speicher oder in einer Datenbank gespeicherten dreidimensionalen Computermodell der Otoplastik oder des Ohrpaßstückes soll nunmehr die eigentliche Fertigung beschrieben werden.

Bei der tatsächlichen computergesteuerten Herstellung der Otoplastik oder des Ohrpaßstückes unterscheidet man prinzipiell zwei Varianten, nämlich ein additives Verfahren, dh. den fortlaufenden Aufbau der Otoplastik oder des Ohrpaßstückes in aufeinanderfolgenden Schritten oder kontinuierlich oder diskontinuierlich, und ein subtraktives Verfahren, bei dem von vorgefertigten Blöcken ausgegangen wird, von denen Material so lange abgetragen wird bis die endgültige Kontur des Ohrpaßstückes oder der Otoplastik erreicht ist. Dies wird noch im einzelnen zu beschreiben sein.

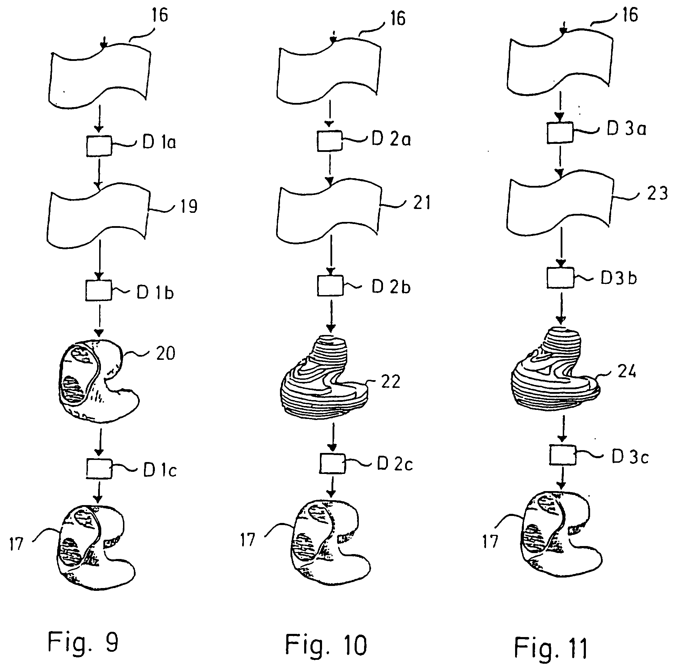

Ein erstes mögliches Verfahren zeigt Fig. 9.

Ausgehend von den in der Datenbank 16 gespeicherten Daten wird dieses dreidimensionale Computermodell in dem Schritt D1a in eine Folge von Querschnitten umgewandelt. Diese Querschnitte können äquidistant sein, müssen es aber nicht. Sie müssen auch nicht planparallel und horizontal verlaufen. Die vorzugsweise zweidimensionalen Querschnittsebenen werden in einer Datenbasis 19 gespeichert. Ausgehend von dieser Datenbasis kann die Otoplastik dann dadurch hergestellt werden, daß die einzelnen Querschnittsebenen nocheinander und übereinander, untereinander oder nebeneinander hergestellt und dann miteinander verbunden werden. So kann z.B. als Schritt D1b ein sterolithografisches oder ähnliches Verfahren verwendet werden. Damit erhält man als "Rohprodukt" z.B. eine Otoplastik 20, die noch bei D1c nachbearbeitet werden muß, worauf man dann die fertige Otoplastik 17 erhält.

Diese Verfahren können dabei auf ganz verschiedene Weise durchgeführt werden. So ist z.B. auf einer computergesteuert bewegbaren Plattform ein Behälter mit aktiviertem flüssigen Kunstharz angeordnet. Durch gezielten Einsatz einer auf die Oberfläche des flüssigen Kunstharzes gerichtete, mindestens eine Teilpolymerisation des Kunstharzes bewirkende Strahlung kann eine erste Querschnittsfläche der Otoplastik erzeugt werden. Anschließend ist es dann erforderlich, jeweils nach Fertigstellen einer Querschnittsfläche, die Plattform um die Dicke einer Schicht abzusenken, damit die nächste Querschnittsebene auf der Oberfläche des flüssigen Kunstharzes in der gleichen Weise erzeugt werden kann. Dies wird dann solange fortgesetzt bis schließlich die mindestens teilweise polymerisierte Otoplastik dem Behälter entnommen werden kann. Gleiches gilt selbstverständlich auch für die Herstellung eines Ohrpaßstückes.

Gemäß einem weiteren Verfahren befindet sich in einem auf einer Plattform angebrachten Behälter ein durch einen Aktivator aktivierbares flüssiges Kunstharz. Oberhalb des Behälters ist eine in ihrer Position dreidimensional steuerbare Injektionsdüse angeordnet, durch die ein Aktivator in das flüssige Kunstharz von unten nach oben fortschreitend intermittierend oder kontinuierlich injiziert werden kann, um mit dem beim Zusammentreffen von Kunstharz und Aktivator mindestens zum Teil aushärtenden Kunstharzes die Otoplastik in dem flüssigen Kunstharz aufzubauen. Dies kann durch Zufuhr von Wärme mittels Infrarotstrahler oder durch Anwesenheit von UV-Strahlung unterstützt werden.

Dieses Verfahren zeigt im wesentlichen Fig. 10.

Ausgehend von der Datenbasis 16, in der das dreidimensionale Computermodell gespeichert ist, wird dieses im Schritt D2a in eine Folge von zweidimensionalen Querschnitten umgewandelt und in der Datenbank bei 21 gespeichert. Das Ohrpaßstück wird dann bei D2b durch die Injektion des Aktivators in die flüssige Kunstharzmasse erzeugt und ergibt dann das bei 22 gezeigte Rohmodell, das dann bei D2c nachbearbeitet wird und schließlich die fertige Otoplastik 17 ergibt.

Das gleiche gilt selbstverständlich auch für ein Ohrpaßstück.

Eine weitere elegante Methode besteht darin, ausgehend von dem in der Datenbasis 16 gespeicherten dreidimensionalen Computemodell, wiederum zweidimensionale Querschnitte abzuleiten, die dann in einer Datenbank ähnlich 19 in Fig. 9 oder 21 in Fig. 10 gespeichert werden. Für die Herstellung der einzelnen Querschnittsebenen ist eine computergesteuerte Schneidvorrichtung vorgesehen, die aus einer Kunstharzfolie oder Kunstharzplotte, die beispielsweise bereits zum Teil polymerisiert sein kann, die einzelnen Querschnitte ausschneidet, die dann übereinander gestapelt und miteinander verbunden werden. Als Schneidvorrichtung eignet sich dafür ein Laser, insbesondere ein im Ultraviolettbereich arbeitender, sogenannter Eximer-Laser. Die Unterlage für die Kunstharzfolie oder die Kunstharzplatte kann beispielsweise ein Förderband mit darauf befindlicher Folie oder Platte sein, sodaß die Querschnitte fortlaufend erzeugt werden können. Andererseits kann die Unterlage auch eine rotierende Scheibe sein. Ebenso ist es möglich, wie bei einer Stanze, Material zuzuführen und die einzelnen Querschnitte nacheinander zu entnehmen, zu stapeln und miteinander zu verbinden, d.h. zu verkleben, zu verschweißen, zu verschrauben oder durch Polymerisieren zu einem Stück zuverbinden.

Eine weitere Möglichkeit besteht darin, diese Querschnitte beispielsweise nach Art eines Druckverfahrens ähnlich einem Tintenstrahldrucker, herzustellen , indem man aufeinanderfolgende Querschnitte in einer Art Drucktechnik fortlaufend erzeugt und nach mindestens teilweiser Polymerisation, die sich bereits beim Druckvorgang ergeben sollte, um sie übereinander zu stapeln und zu einer Otoplastik miteinander zu verbinden. Auch eine derart hergestellte Otoplastik muß selbstverständlich in üblicher Weise nachbearbeitet werden und ergibt dann ebenfalls die fertige Otoplastik 17.

In Fig. 11 ist ein weiteres für die Herstellung einer Otoplastik oder eines Ohrpaßstückes geeignetes Verfahren dargestellt. Ausgehend von der Datenbasis 16 mit darin gespeichertem dreidimensionalen Computermodell wird im Schritt D3a eine dreidimensionale Bahn erzeugt, die das dreidimensionale Computermodell der Otoplastik oder des Ohrpaßstückes allseitig beschreibt. Dies wird in der Datenbasis 23 gespeichert. Für die Herstellung der Otoplastik ist oberhalb einer Plattform eine in ihrer Bewegung dreidimensional steuerbare Extrudierdüse angeordnet, aus der ein beim Austreten aus der Düse beim Aufbringen auf die Plattform mindestens teilweise polymerisierendes Kunstharz kontinuierlich oder diskontinuierlich extrudiert wird bis dann der bei 24 gezeigte extrudierte Körper einer Otoplastik erzeugt ist. Dieser wird dann in üblicher Weise im Schritt D3c nachbearbeitet und ergibt wiederum die fertige Otoplastik 17.

Gleiches gilt selbstverständlich auch für die Herstellung eines Ohrpaßstückes.

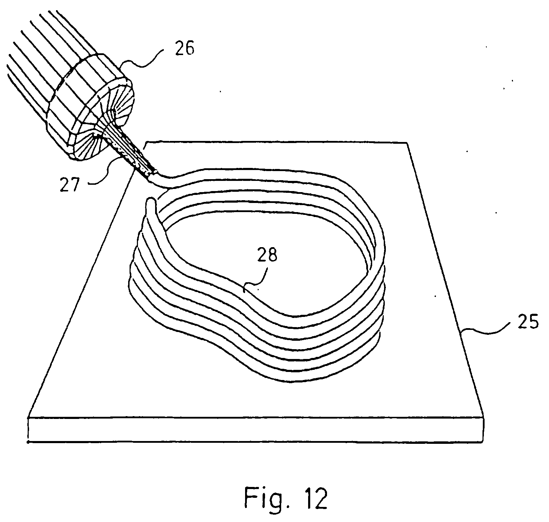

Fig. 12 zeigt dieses Verfahren im Prinzip. Über einer Plattform 25 ist eine in ihrer Bewegung dreidimensional steuerbare Extrudiervorrichtung 26 mit einer Extrudier-Düse 27 angeordnet, aus der ein Strang eines polymerisierbaren flüssigen oder pastenartigen Kunstharzes zur Bildung der Otoplastik auf die Plattform aufgebracht wird. Dazu kann man auch die Düse 27 stationär halten und die Plattform in einer entsprechenden mehrdimensionalen Bewegung steuern. Es kann allerdings auch sehr zweckmäßig sein, sowohl die Position der Düse 27 als auch die Position der Plattform 25 zu steuern.

In den folgenden Abschnitten soll nunmehr das subtraktive Verfahren an Ausführungsbeispielen erläutert werden.

Da der Ohrkanal sehr oft kleine oder größere Biegungen und Krümmungen aufweist, ist es normalerweise nicht möglich, mittels Bohr- oder Fräseinrichtungen beim Herstellen eines Ohrpaßstückes oder einer Otoplastik aus dem Vollen das Innere in der erforderlichen Weise auszuhöhlen. Die äußeren Konturen eines Ohrpaßstückes oder einer Otoplastik lassen sich normalerweise mit einer numerisch gesteuerten Fräsvorrichtung herstellen und dies würde sich auch zufriedenstellend einsetzen lassen. Darauf wird noch einzugehen sein.

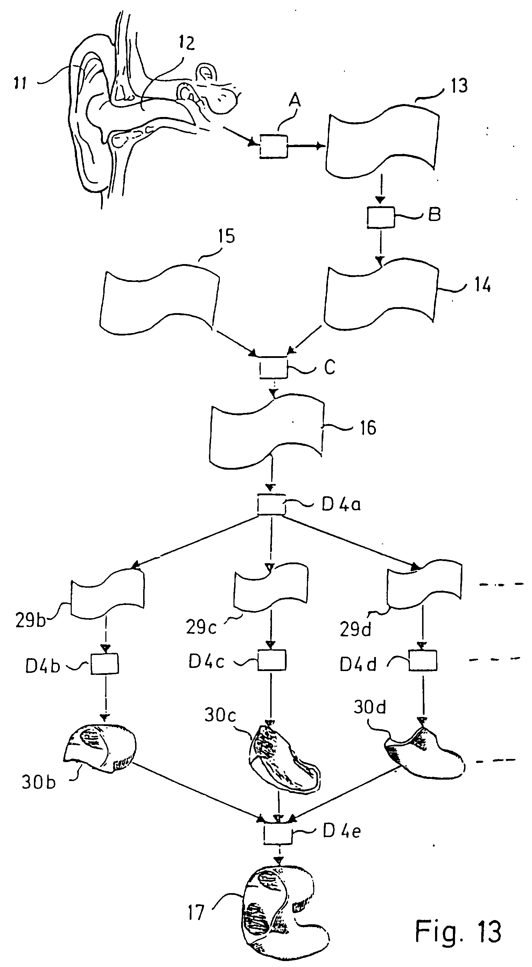

So zeigt beispielsweise Fig. 13 ein solches Verfahren. Die Ermittlung der Konturen des Ohrkanals 12 erfolgt in der im Zusammenhang mit Fig. 3 und auch später in Fig. 4 beschriebenen Weise bis zur Erstellung und Speicherung eines dreidimensionalen Computermodells der Otoplastik oder des Ohrpaßstückes in der Datenbank oder im Speicher 16, so daß eine besondere Beschreibung hier nicht erforderlich ist.

Da, wie bereits angedeutet, es sehr schwierig sein kann, eine Otoplastik oder ein Ohrpaßstück einstückig herzustellen, wird vorgeschlagen, gemäß Schritt D4a das dreidimensionale Computermodell in mehrere dreidimensionale Teilmodelle zu zerteilen, die dann in den Datenbasen 29b, 29c, 29d ... gespeichert werden. Anschließend wird gemäß den Schritten D4b, D4c und D4d ... aus einem Materialblock mittels computergesteuerter Fräs- und- oder Schleifvorrichtung eines der Teile 30b, 30c und 30d ... erzeugt. Dabei geht man etwa von Kunstharzblöcken aus, die etwa die Größe des zu fertigenden Teiles aufweisen. Bei diesem Verfahren werden also sowohl die inneren als auch die äußeren Konturen der einzelnen Teile einer Otoplastik oder eines Ohrpaßstückes durch computergesteuerte Fertigungsverfahren hergestellt. Diese Teile ergeben dann über den Schritt D4e das fertige Ohrpaßstück, In diesem Zusammenhang muß erwähnt werden, daß es verschiedene Möglichkeiten gibt, diese einzelnen Teile zusammenzufügen. Beispielsweise könnte man Zapfen- und Zapfenlöcher vorsehen oder vorspringende Kanten oder Absätze, an denen die einzelnen Teile zu einem Ganzen zusammengefügt und miteinander durch Verkleben, Verschweißen, Polymerisieren oder ähnliches verbunden werden können. Ebenso ist es möglich, in einzelnen Teilen Gewindebohrungen und in anderen Teilen Bohrungen für Schrauben vorzusehen, so daß die einzelnen Teile durch Verschrauben miteinander zusammengefügt werden können. Dies hätte den Vorteil, daß das Gerät für Reparaturen auch auseinandergenommen werden könnte.

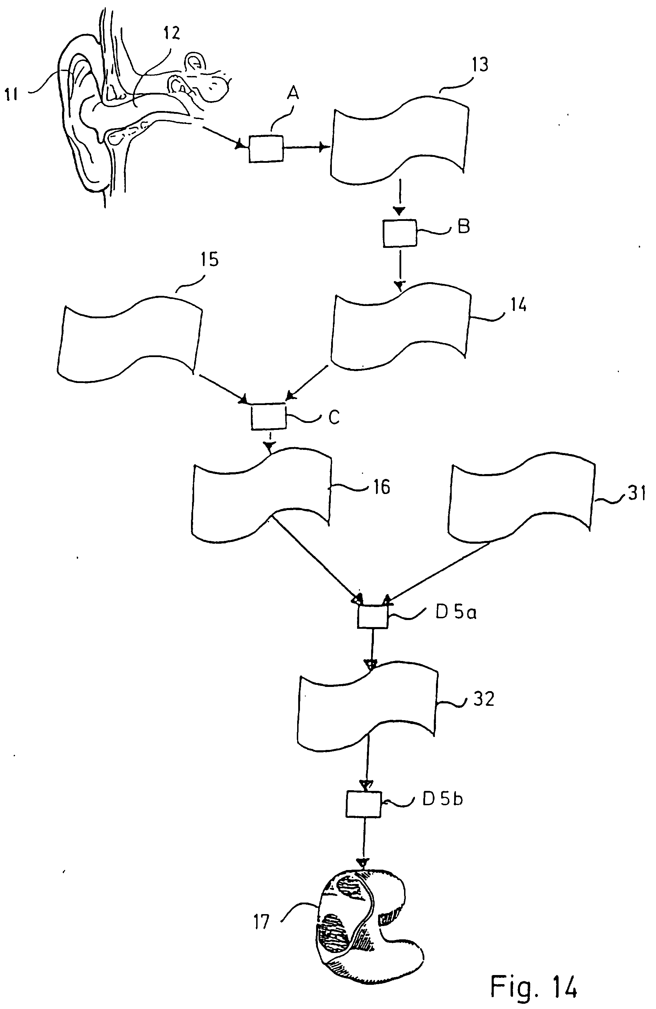

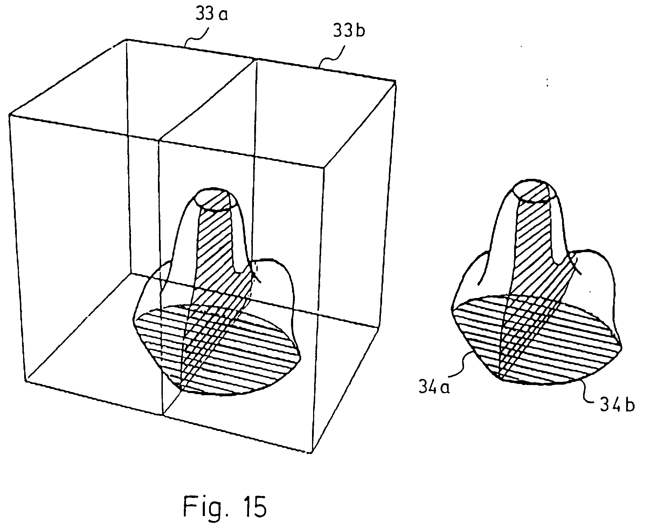

Ein weiteres Verfahren dieser Art zeigt Fig. 14 in Verbindung mit den Figuren 15 bis 17.

Zunächst werden, wie in Fig. 3 oder 4 und Fig. 13, wiederum die Abmessungen des Ohrkanals erfaßt und schließlich im Datenspeicher oder in der Datenbank 16 als dreidimensionales Computermodell der Otoplastik gespeichert.

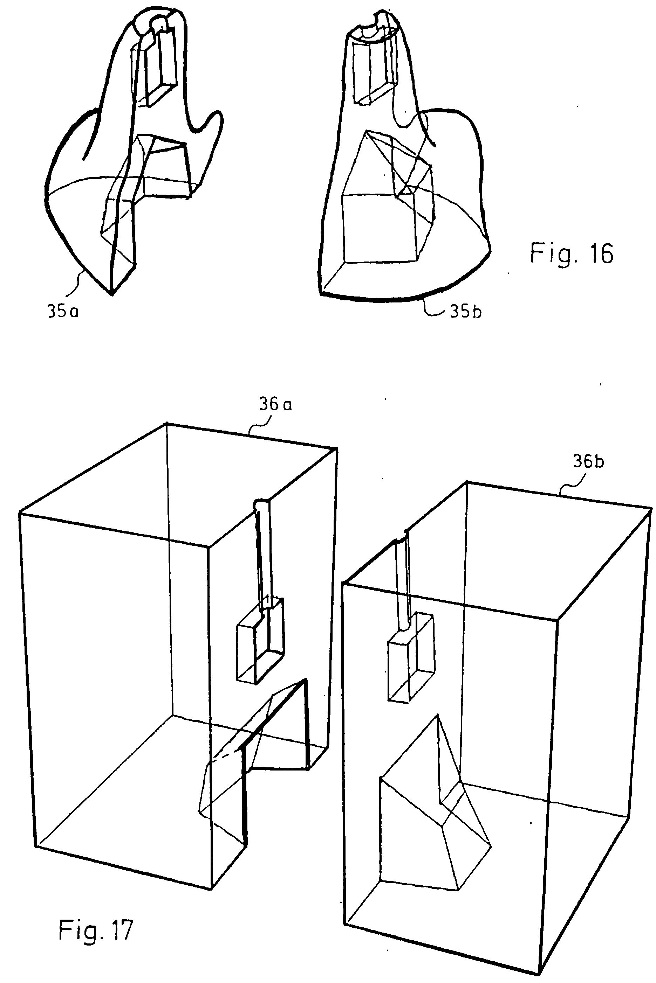

Bei diesem Verfahren wird eine weitere Datenbank 31 verwendet, in der vorgefertigte rohe Kunststoffblöcke, wie sie in Fig. 17 mit 36a und 36b dargestellt sind, gespeichert sind. Diese Kunststoffblöcke, die beispielsweise zwei oder mehreren Teilen einer Otoplastik oder des Gehäuses eines Im-Ohr-Hörgerätes entsprechen, enthalten bereits einige der für Bauelemente/Funktionen vorgesehenen Kammern. In dem Verfahrensschritt D5a werden die Daten aus den Datenbanken 16 und 32 in der Weise zusammengeführt, daß die entsprechenden Positionen und Größenordnungen für die Herstellung einer Otoplastik aus den vorgefertigten Kunststoffblöcken optimiert wird. Diese optimierten Daten gelangen dann in denSpeicher 32, der ebenfalls ein Teil der Datenbank sein kann.

Die in diesem Speicher enthaltenen Daten werden dann im Schritt D5b dazu verwendet, die endgültige Form der Otoplastik maschinell durch Fräsen oder Schleifen, d.h. generell durch Abtragen des Materials von der Außenseite bis zum Erreichen der vorgegebenen, zuvor ermittelten, äußeren Konturen der Otoplastik herzustellen. Dies ist beispielsweise in Fig. 15 gezeigt, wo aus den Blöcken 33a und 33b die Teile 34a und 34b erzeugt werden.

Aus den vorgefertigten Blöcken, die bereits die verschiedenen Hohlräume für das Hörgerät enthalten, und die in Fig. 17 bei 36a und 36b gezeigt sind, entstehen durch die Bearbeitung dann die fertigen Teile 35a und 35b gemäß Fig. 16.

Obgleich zunächst bei diesem subtraktiven Verfahren die Verwendung von Bohr- oder Fräseinrichtungen mit numerisch gesteuerten Maschinen angezeigt sein könnte, so wäre auch hier die Verwendung eines im Ultraviolettbereich arbeitenden sogenannten Eximer-Lasers von besonderem Vorteil, da damit das Material von dem Kunststoffblock oder den Kunststoff- oder Kunstharzblöcken mit hoher Präzision abgetragen werden könnte, wobei selbst komplizierteste äußere und innere Formen oder Oberflächen ohne Schwierigkeiten hergestellt werden könnten.

Dieses Verfahren ist daher in besonderem Maße für den Einsatz dieses subtraktiven Verfahrens geeignet.

Obgleich bisher eine Reihe von Verfahren zur Herstellung von Otoplastiken oder Ohrpaßstücken, ausgehend von den am Ohrkanal entnommenen Abmessungen der Konturen bis zur Computerdarstellung der dreidimensionalen Otoplastik oder eines derartigen Ohrpaßstückes beschrieben wurden, sind doch , ausgehend von diesen Daten und deren Umwandlung in zweidimensionale Querschnitte oder dreidimensionale Bahnkurven, auch andere Herstellungsverfahren denkbar, die ebenfalls im Bereich dieser Erfindung liegen und nicht ausgeschlossen sein sollen.

## Patentansprüche

1. Verfahren zum computergesteuerten Herstellen von individuell an die Konturen des Ohrkanals angepaßten, einteiligen oder aus mehreren getrennt voneinander bearbeitbaren Teilen bestehenden Otoplastiken oder Ohrpaßstücken durch direktes oder indirektes Erfassen der inneren Konturen des Ohrkanals, beispielsweise durch Abnehmen eines Ohrabdruckes, und umwandeln der so ermittelten Werte in eine digitale Darstellung, gekennzeichnet durch die Umwandlung dieser digitalen Darstellung der Konturen des Ohrkanals in ein multidimensionales, vorzugsweise dreidimensionales, Computermodell der äußeren Konturen der Otoplastik oder des Ohrpaßstückes mit
Auswahl der verschiedenen Bauelemente/Funktionen für den Innenraum des Computermodells bei gleichzeitiger Festlegung der Wandstärke und Optimierung der Positionen der Bauelemente/Funktionen bezüglich optimaler Funktion und minimaler Größenabmessungen in diesem Innenraum, und anschließende computergesteuerte Herstellung der Otoplastik oder des Ohrpaßstückes aus den so ermittelten Daten der optimierten dreidimensionalen Computerdarstellung der Otoplastik oder des Ohrpaßstückes.

2. Verfahren nach Anspruch 1, dadurch gekennzeichnet, daß eine direkte Erfassung der inneren Konturen des Ohrkanals als berührungslose Abtastung mit Hilfe von Ultraschall vorgenommen wird.

3. Verfahren nach Anspruch 1, dadurch gekennzeichnet, daß eine indirekte Erfassung der inneren Konturen des Ohrkanals nach Abnahme eines Ohrabdruckes durch zerstörungsfreies Abtasten dieses Ohrabdruckes mit einer diesen durchdringenden Strahlung durchgeführt wird und die dabei ermittelten Werte digitalisiert und in digitaler Form gespeichert werden.

4. Verfahren nach Anspruch 3, dadurch gekennzeichnet, daß die Abtastung der Konturen des Ohrabdruckes mittels Röntgenstrahlung vorgenommen wird.

5. Verfahren nach Anspruch 3, dadurch gekennzeichnet, daß die Abtastung der Konturen des Ohrabdruckes mit Hilfe von Ultraschall vorgenommen wird.

6. Verfahren nach Anspruch 1, dadurch gekennzeichnet, daß der Ohrabdruck in aufeinanderfolgenden Schritten in dünne Schichten geschnitten wird, und daß die Abmessungen dieser dünnen Querschnittsschichten erfaßt, in digitale Form umgewandelt und digital gespeichert werden.

7. Verfahren nach Anspruch 6, dadurch gekennzeichnet, daß das Material des Ohrabdruckes in aufeinanderfolgenden Schritten jeweils um einen geringen Betrag abgetragen wird, daß darauf die so entstandene Oberfläche z.B. mittels Videokamera erfaßt und die so erfaßten Flächenwerte digitalisiert und in digitaler Form gespeichert werden.

8. Verfahren nach Anspruch 7, dadurch gekennzeichnet, daß der Ohrabdruck in einen Block aus kontrastfarbenem, beispielsweise schwarzen, Kunstharz eingebettet wird, und daß der so erhaltene Block in aufeinanderfolgenden Schritten in dünne Schichten geschnitten wird, und daß die Abmessungen dieser dünnen Querschnittsschichten erfaßt, in digitale Form umgewandelt und digital gespeichert werden.

9. Verfahren nach Anspruch 8, dadurch gekennzeichnet, daß die Abmessungen aufeinanderfolgender Querschnitte des den Ohrabdruck enthaltenden Blocks zerstörungsfrei durch Abtastung in Querschnitten mit einer den Block durchdringenden oder an den Kontrastflächen der Konturen des Ohrabdrucks reflektierten Strahlung erfaßt und die so ermittelten Werte digitalisiert und digital gespeichert werden.

10. Verfahren nach einem der Ansprüche 1 bis 9, dadurch gekennzeichnet, daß die Umwandlung der digitalen Darstellung der Konturen des Ohrkanals in eine dreidimensionale Darstellung der Otoplastik oder des Ohrpaßstückes in der Weise erfolgt, daß die Konturen in eine sehr große aber endliche Anzahl von finiten Elementen, z.B. in Form von kleinsten Dreiecken oder anderer Polyganzüge im dreidimensionalen Raum als Netzwerk solcher Elemente überführt werden.

11. Verfahren nach einem der Ansprüche 1 bis 9, dadurch gekennzeichnet, daß die Konturen des dreidimensionalen Modells der Otoplastik oder des Ohrpaßstückes in eine Anzahl differenzierbarer oder partiell differenzierbarer dreidimensionaler Kurven züge überführt werden.

12. Verfahren nach einem der Ansprüche 1 bis 11, dadurch gekennzeichnet, daß die verschiedenen Bauelemente/Funktionen manuell in den Innenraum der dreidimensionalen Darstellung des Computermodells der Otoplastik oder des Ohrpaßstückes mittels Computer-Bildschirmdarstellung plaziert oder eingegeben werden.

13. Verfahren nach einem der Ansprüche 1 bis 11, dadurch gekennzeichnet, daß diese Eingabe mit Computerunterstützung bei gleichzeitiger Optimierung der inneren Oberflächen und deren optimalen Abstand von der äußeren Oberfläche der Otoplastik oder des Ohrpaßstückes bei gleichzeitiger Optimierung der Positionen/Abmessungen der Bauelemente/Funktionen erfolgt.

14. Verfahren nach einem der Ansprüche 1 bis 11, dadurch gekennzeichnet, daß die Anordnung der Bauelemente/Funktionen und die gesamte Optimierung voll selbsttätig durch den Computer gesteuert abläuft.

15. Verfahren nach einem der Ansprüche 12 oder 13, dadurch gekennzeichnet, daß die dreidimensionale Darstellung des Computermodells der Otoplastik oder des Ohrpaßstückes in eine zweidimensionale Bildschirmdarstellung von der Art umgewandelt wird, die bei Betrachtung mit polarisierenden Gläsern den Eindruck einer dreidimensionalen Darstellung vermittelt.

16. Verfahren nach einem der Ansprüche 1 bis 15, gekennzeichnet durch folgende weitere Verfahrensschritte:
Erzeugen einer Computerdarstellung einer Folge von einteiligen oder mehrteiligen Querschnitten des Computermodells;
Aufbau der als Computerdarstellung existierenden dreidimensionalen Otoplastik oder des Ohrpaßstückes durch wiederholte körperliche Erzeugung von einteiligen oder mehrteiligen Querschnittsschichten und deren fortschreitenden Aufbau übereinander als Folge solcher Querschnittsschichten sowie
Nachbearbeitung der fertiggestellten einteiligen oder mehrteiligen Otoplastik oder des Ohrpaßstückes nach erfolgter Aushärtung durch Glätten der Oberflächen, Polieren, Entfernen von Stützteilen, ggf. Zusammenfügen der einzelnen Teile der Otoplastik oder des Ohrpaßstückes und ggf. Befestigen der Bauelemente.

17. Verfahren nach Anspruch 16, gekennzeichnet durch folgende Verfahrensschritte:
Umwandeln der Folge der Querschnitte in eine ununterbrochene oder unterbrochene Folge von Steuersignalen;
Verwendung dieser Steuersignale zur Steuerung eines fokusierten Laserstrahles und einer steuerbar bewegbaren Plattform;
Verwendung eines mit flüssigem aktivierten Kunstharz gefüllten, auf der gesteuert bewegbaren Plattform angeordneten Behälters zur Erzeugung der Otoplastik bzw. des Ohrpaßstückes bzw. von Teilen derselben durch den kontinuierlich oder diskontinulerlich gesteuert bewegten fokussierten Laserstrahl für einen kontinuierlichen oder diskontinuierlichen Aufbau der Otoplastik oder des Ohrpaßstückes durch jeweils örtliche, mindestens teilweise Polymerisierung zweidimensionaler Oberflächenbereiche des Kunstharzes.

18. Verfahren nach Anspruch 16, gekennzeichnet durch folgende Verfahrensschritte:
Umwandeln des optimierten Computermodells in eine ununterbrochene oder unterbrochene Folge von Steuersignalen;
Verwendung dieser Steuersignale zur multidimenionalen Steuerung der Position einer Injektionsdüse und einer steuerbar bewegbaren Plattform zur kontinuierlichen oder diskontinuierlichen Erzeugung der vollständigen Form der Otoplastik oder des Ohrpaßstückes bzw. von deren Teilen;
Verwendung eines auf der steuerbar bewegbaren Plattform angeordneten, mit einem passivierten flüssigen Kunstharz gefüllten Behälters;
Injizieren eines Aktivators aus der in ihrer Bewegung zur Erzeugung der Otoplastik oder des Ohrpaßstückes bzw. deren Teile kontinuierlich oder diskontinuierlich gesteuert bewegten Düse in das flüssige Kunstharz, bei ständig vorhandener UV - oder Wärmestrahlung für einen kontinuierlichen oder diskontinuierlichen Aufbau der Otoplastik oder des Ohrpaßstückes oder von Teilen derselben aus dem sich durch Injektion des Aktivators mindestens zum Teil polymerisierenden Kunstharz.

19. Verfahren nach Anspruch 18, dadurch gekennzeichnet, daß zusätzlich zu der durch Injektion gezielt erfolgenden Zufuhr des Aktivators mindestens am Ort der Injektion Wärme zugeführt wird.

20. Verfahren nach Anspruch 19, dadurch gekennzeichnet, daß die Wärme in Form von gerichteter oder diffuser Infrarotstrahlung zugeführt wird.

21. Vorrichtung nach Anspruch 18, dadurch gekennzeichnet, daß zusätzlich eine im wesentlichen konstante Ultraviolettstrahlung zugeführt wird.

22. Verfahren nach Anspruch 16, dadurch gekennzeichnet, daß die so erzeugten, aus einem Kunststoff bestehenden, z.B. teilpolymerisierten Querschnittschichten übereinandergeschichtet und durch Verkleben, Polymerisieren, durch Anwendung von Wärme und/oder UV-Strahlung miteinander fest verbunden werden.

23. Verfahren nach Anspruch 22, gekennzeichnet durch folgende weitere Verfahrensschritte:
Umwandeln des optimierten dreidimensionalen digitalen Computermodells in eine Folge von Steuersignalen zur wiederholten Steuerung einer Austragvorrichtung zum Aufbringen von aufeinanderfolgenden Querschnittsschichten einer aushärtbaren Kunststoffmasse entsprechend den Mustern der Querschnittsebenen auf einer ebenen Oberfläche mit jeweils teilweiser Aushärtung der einzelnen Schichten;
Stapeln der Schichten übereinander und Aushärten des fertigen Stapels zur Bildung einer Otoplastik oder eines Ohrpaßstückes
und
Nachbearbeiten der so erzeugten Otoplastiken oder Ohrpaß stücke nach erfolgter Aushärtung.

24. Verfahren nach Anspruch 23, gekennzeichnet durch folgende weitere Verfahrensschritte:
Umwandlung des optimierten dreidimensionalen digitalisierten Computermodells in eine ununterbrochene oder unterbrochene Folge von Steuersignalen zur wiederholbaren Steuerung einer Schneidvorrichtung zum Ausschneiden aufeinanderfolgender Querschnitte aus einer dünnen Kunststoff-Folie oder einer dünnen Kunststoff-Platte;
Stapeln dieser so erzeugten Querschnitte übereinander zur Bildung der Otoplastik oder des Ohrpaßstückes;
Verbinden der Querschnitte miteinander durch Verkleben durch Wärme und/oder ultraviolette Strahlung und Nachbearbeiten der so erzeugten Otoplastik oder des Ohrpaßstückes.

25. Verfahren nach Anspruch 24, dadurch gekennzeichnet, daß als Schneidvorrichtung ein in seiner Bewegung computergesteuerter Laserstrahl verwendet wird.

26. Verfahren nach Anspruch 24 oder 25, dadurch gekennzeichnet, daß als Schneidvorrichtung ein in seiner Bewegung computergesteuerter im Ultraviolettbereich arbeitender sogenannter Eximer-Laser verwendet wird.

27. Verfahren nach einem der Ansprüche 1 bis 15, gekennzeichnet durch folgende Verfahrensschritte:
Umwandeln des optimierten Computermodells in eine ununterbrochene oder unterbrochene Folge von Steuersignalen für die Verfolgung von einem oder mehreren Pfaden im Raum derart, daß die Summe aller Pfade ein Netzwerk, eine Spirale oder sonst einen Poylgonzug bildet, der den Körper der Otoplastik oder des Ohrpaßstückes allseitig beschreibt;
Verwendung eines mit einem polymerisierbaren Kunstharz gefüllten Behälters;
Verwendung dieser Steuersignale zur multidimensionalen Steuerung der Position einer in den Behälter eintauchenden Injektionsdüse zur Injektion eines Aktivators, der unter vorgegebenen Bedingungen nach Austreten aus der Düse relativ rasch das Kunstharz, mindestens zum Teil, aushärtet
und
Führung dieser Düse längs dieser Pfade in einer die vollständigen Konturen der Otoplastik bzw. des Ohrpaßstückes bzw. deren Teile umfassenden und umschreibenden multidimensionalen Bewegung.

28. Verfahren nach einem der Ansprüche 1 bis 15, gekennzeichnet durch folgende Verfahrensschritte:
Umwandeln des optimierten Computermodells der Otoplastik oder des Ohrpaßstückes in eine ununterbrochene oder unterbrochene Folge von Steuersignalen für die Verfolgung von einem oder mehreren Pfaden im Raum derart, daß die Summe aller Pfade ein Netzwerk, eine Spirale oder sonst einen Polygon zug bildet, der den Körper der Otoplastik oder des Ohrpaßstückes bzw. Teile derselben allseitig beschreibt;
Verwendung dieser Steuersignale zur multidimensionalen Steuerung der Position einer Extrudierdüse längs einer dreidimensionalen Bahn zur Extrudierung eines flüssigen oder pastenartigen relativ rasch mindestens teilweise aushärtenden Kunstharzes auf eine Unterlage in einer die vollständigen Konturen der Otoplastik oder des Ohrpaßstückes erfassenden und umschreibenden Bewegung.

29. Verfahren nach Anspruch 28, dadurch gekennzeichnet, daß die Düse stationär gehalten wird, daß zum Aufbau der Otoplastik bzw. des Ohrpaßstückes eine steuerbar bewegbare Plattform vorgesehen ist, und daß durch die dreidimensionalen Koordinaten des Computermodells die computergesteuerte Bewegung der steuerbar bewegbaren Plattform längs der genannten Pfade in einem multidimensionalen Bewegungsablauf erfolgt.

30. Verfahren nach den Ansprüchen 28 und 29, dadurch gekennzeichnet, daß die Bewegung der Düse bzw. der Plattform mit sechs Freiheitsgraden erfolgt.

31. Verfahren nach den Ansprüchen 28 bis 30, dadurch gekennzeichnet, daß als Kunstharz ein aktiviertes Acrylharz verwendet wird.

32. Verfahren nach einem der Ansprüche 1 bis 15, gekennzeichnet durch folgende Verfahrensschritte:
Manuelles, interaktives oder automatisches Definieren von einer Schnittfläche oder von mehreren ebenen oder gekrümmten Schnittflächen, die das Computermodell der Otoplastik oder des Ohrpaßstückes in zwei oder mehrere, für sich alleine durch Abtragen von Material herstellbare Teile unterteilt;
Erzeugen von Steuersignalen für eine Material-Abtragvorrichtung zur Steuerung der Bewegung einer solchen Vorrichtung und Zerteilen eines die Konturen der Otoplastik bzw. des Ohrpaßstückes allseitig umschließenden Blocks aus Kunststoff in die ermittelte Anzahl von Teilblöcken
und
allseitiges Abtragen des Materials von den Teilblöcken zum Herstellen entsprechender Teile der Otoplastik oder des Ohrpaßstückes
und
anschließendes Zusammenfügen dieser Teile.

33. Verfahren nach Anspruch 32, dadurch gekennzeichnet, daß die Lage und die Form der Trennflächen für die kleinste Anzahl von Teilblöcken und für die einfachste und praktischste Art der Materialabtragung optimiert werden.

34. Verfahren nach Anspruch 32 oder 33, dadurch gekennzeichnet, daß zum Abtragen des Materials von den einzelnen Teilblöcken ein im Ultraviolettbereich arbeitender sogenannter Eximer-Laser verwendet wird.

35. Verfahren nach den Ansprüchen 32 bis 34, dadurch gekennzeichnet, daß die einzelnen Teile der Otoplastik oder des Ohrpaßstückes für einen späteren permanenten Zusammenbau durch Verkleben, Polymerisieren oder Wärmebehandlung mit für diesen Zweck geeigneten Nuten, Federn, Bohrungen, Zapfen, abgestufte Kanten oder dergleichen versehen werden.

36. Verfahren nach Anspruch 32 bis 34, dadurch gekennzeichnet, daß zur lösbaren Verbindung der einzelnen Teile der Otoplastik oder des Ohrpaßstückes bei der computergesteuerten Herstellung der Teile einrastbare Verbindungsteile wie Zapfen und Bohrungen sowie Bohrungen für Schrauben, Rastfedern oder dergleichen erzeugt werden.

37. Verfahren für ein computergesteuertes Abtragen des Materials von einem ausgewählten Block oder von ausgewählten Blöcken zur Herstellung der äußeren Konturen der Otoplastik oder des Ohrpaßstückes nach einem der Ansprüche 1 bis 15, gekennzeichnet durch folgende Verfahrensschritte:
Speichern eines Satzes oder mehrer Sätze von Definitionen, Abmessungen und Positionen aller notwendigen Funktionen/Bauelemente von bereits vorgefertigten, in Kunststoffblocks eingebetteten, nur in ihren inneren Konturen vorgegebenen Otoplastiken oder Ohrpaßstücken in einer Datenbank;
Manuelles, interaktives oder automatisches Optimieren der äußeren Oberfläche des Computermodells bzw. des Ohrpaßstückes bezüglich der Lage innerhalb eines ausgewählten Blocks für geringste Endabmessungen und für ein optimales kosmetisches Erscheinungsbild.

38. Verfahren nach Anspruch 37, dadurch gekennzeichnet, daß zum Abtragen des Materials von dem ausgewählten Block oder den ausgewählten Blöcken ein im Ultraviolettbereich arbeitender sogenannter Eximer-Laser verwendet wird.

## Claims

1. Method for computer-controlled production of otoplasties or adaptive earpieces consisting of one part or several parts which are individually matched to the contours of the auditory canal by direct or indirect tracing of the inner contours of the auditory canal, for example by production of an ear impression and conversion of the values thereby obtained into a digital representation, characterized by conversion of this digital representation of the auditory canal into a multi-dimensional, preferably three-dimensional, computer model of the external contours of the otoplasty or adaptive earpiece with
selection of the various components/functions for the interior of the computer model with simultaneous definition of the wall thickness and optimization of the positions of the components/functions with respect to optimum function, position and minimum bulk in this interior, and subsequent computer-controlled production of the otoplasty or adaptive earpiece from the thus determined data of the optimized three-dimensional computer representation of the otoplasty or adaptive earpiece.

2. Method in accordance with claim 1, characterized in that direct tracing of the internal contours of the auditory canal is performed by contactless scanning using ultrasound.

3. Method in accordance with claim 1, characterized in that indirect tracing of the internal contours of the auditory canal after making of an ear impression is performed by non-destructive scanning of this ear impression with radiation which penetrates the latter, whereby the values determined in this way are digitized and stored in digital form.

4. Method in accordance with claim 3, characterized in that scanning of the *contours of the ear impression is performed by means of X-rays.*

5. Method in accordance with claim 3, characterized in that scanning of the contours of the ear impression is performed with ultrasound.

6. Method in accordance with claim 1, characterized in that the ear impression is cut into thin layers in successive steps, and that the dimensions of these thin cross-sectional layers are determined, converted into digital form and digitally stored.

7. Method in accordance with claim 6, characterized in that the material of the ear impression is removed by a small amount in each case in successive steps and that the resultant surface is then traced, i.e. by means of a video camera, and the acquired surface values then digitized and stored in digital form.

8. Method in accordance with claim 7, characterized in that the ear impression is embedded in a block of synthetic resin made of a contrasting color, for example, black, that the block obtained in this way is cut into thin layers in successive steps, and that the dimensions of these thin cross-sectional layers are recorded, converted into digital form and digitally stored.

9. Method in accordance with claim 8 characterized in that the dimensions of successive cross-sections of the block containing the ear impression are determined without destruction by scanning in cross-sections with radiation which penetrates the block or which is reflected at the contrast surface of the contours of the ear impression, whereby the values obtained in this way are then digitized and then digitally stored.

10. Method in accordance with one of claims 1 to 9, characterized in that conversion of the digital representation of the contours of the auditory canal into a three-dimensional representation of the otoplasty or adaptive earpiece takes place by transforming the contours into a very large but finite number of finite elements, e.g. in the form of tiny triangles or other polygons in three-dimensional space as a network of such elements.

11. Method in accordance with one of claims 1 to 9, characterized in that the contours of the three-dimensional model of the otoplasty or of the adaptive earpiece are transformed into a number of differentiable or partially differentiable three-dimensional curves.

12. Method in accordance with one of claims 1 to 11, characterized in that the various components/functions are manually positioned or entered in the three-dimensional representation of the computer model of the otoplasty or adaptive earpiece using the computer monitor representation.

13. Method in accordance with one of claims 1 to 11, characterized in that this input is made with computer support with simultaneous optimization of the inner surface and its optimum distance from the outer surface of the otoplasty or adaptive earpiece along with simultaneous optimization of the positions/ dimensions of the components/functions.

14. Method in accordance with one of claims 1 to 11, characterized in that the arrangement of components/functions and the whole of the optimization process are controlled fully automatically by the computer.

15. Method in accordance with one of claims 12 or 13, characterized in that the three-dimensional representation of the computer model of the otoplasty or of the adaptive earpiece is transformed into a two-dimensional display representation of the kind which conveys a three-dimensional representation when observed with polarizing glasses.

16. Method in accordance with one of claims 1 to 15 characterized by the following additional process steps:
Generation of a computer representation of a sequence of one-part of multi-part cross sections of the computer model;
build-up of the three-dimensional otoplasty or adaptive earpiece existing as a computer representation by repeated physical production of one-part or multi-part cross-sections and their progressive build-up on top of each other as a sequence of such cross-sectional layers and
reworking of the finished one-part or multi-part otoplasty or adaptive earpiece after hardening by smoothing the surfaces, polishing, removal of support parts, assembly of the individual parts of the otoplasty or adaptive earpiece when necessary and securing of components when necessary.

17. Method in accordance with claim 16, characterized by the following process steps:
Transformation of the sequence of cross-sections into a continuous or discontinuous sequence of control signals;
use of these control signals to control a focused laser beam and a platform capable of controlled movement;
use of a container filled with liquid activated synthetic resin located on the platform capable of controlled movement in order to produce the otoplasty or adaptive earpiece or parts of these by the continuous or discontinuous focused laser beam moved in a controlled manner for continuous or discontinuous build-up of the otoplasty or adaptive earpiece by way of local at least partial polymerization of two-dimensional surface areas of the synthetic resin.

18. Method in accordance with claim 16, characterized by the following process steps:
Conversion of the thus optimized computer model into a continuous or discontinuous sequence of control signals;
use of these control signals for multi-dimensional control of the position of an injection nozzle and a platform capable of controlled movement for continuous or discontinuous production of the complete form of the otoplasty or of the adaptive earpiece or of their parts;
use of a container filled with a passivated liquid synthetic resin and located on the platform capable of controlled movement;
injection of an activator from the nozzle, which is moved to produce the otoplasty or adaptive earpiece or their parts in a continuous or discontinuous and controlled manner, into the liquid synthetic resin, whereby UV or heat radiation is continuously present to permit continuous or discontinuous build-up of the otoplasty or adaptive earpiece or parts of these from the synthetic resin which polymerizes at least partially as a result of injection of the activator.

19. Method in accordance with claim 18, characterized in that heat is supplied at least at the place of injection to the targeted supply of the activator by injection.

20. Method in accordance with claim 19, characterized in that the heat is supplied in the form of directed or diffuse infrared radiation.

21. Method in accordance with claim 18, characterized in that essentially constant ultraviolet radiation is supplied additionally.

22. Method in accordance with claim 16, characterized in that the cross-sectional layers produced in this way made of plastic and, for example, partially polymerized are placed on top of each other in layers and permanently bonded to each other by glueing, polymerization, use of heat and/or use of UV radiation.

23. Method in accordance with claim 22, characterized by the following additional process steps:
Conversion of the optimized three-dimensional digital computer model into a sequence of control signals for repeated control of a discharge device for applying successive cross-sectional layers in the form of layers of a hardenable plastic mass corresponding to the patterns of the cross-sectional layer planes on a flat surface with partial hardening of the individual layers in each case;
stacking of the layers on top of each other and hardening of the finished stack to form an otoplasty or an adaptive earpiece
and
reworking of the otoplasty or adaptive earpieces produced in this way after hardening.

24. Method in accordance with claim 23, characterized by the following additional process steps:
Conversion of the optimized three-dimensional digitized computer model into a continuous or discontinuous sequence of control signals for repeated control of a cutting device for cutting out successive cross-sections from a thin plastic film or a thin plastic sheet;
stacking of the cross-sections produced in this way on top of each other to form the otoplasty or adaptive earpiece;
joining of the cross-sections with each other by glueing by heat and/or ultraviolet radiation and reworking of the otoplasty or adaptive earpiece produced in this way.

25. Method in accordance with claim 24, characterized in that a laser beam with computer-controlled movement is used as the cutting device.

26. Method in accordance with claim 24 or 25, characterized in that a so-called Eximer laser operating in the ultraviolet range and with computer-controlled movement is used as the cutting device.

27. Method in accordance with one of the claims 1 to 15 characterized by the following process steps:
Conversion of the thus optimized computer model into a continuous or discontinuous sequence of control signals for following one or more paths in space in such a way that the sum of all paths forms a network, spiral or other polygon which describes the body of the otoplasty or adaptive earpiece on all sides;
use of a container filled with a polymerizable synthetic resin;
use of these control signals for multi-dimensional control of the position of an injection nozzle immersed in the container to inject an activator which hardens the synthetic resin at least partially relatively quickly after emerging from the nozzle under the given conditions and
guidance of this nozzle along these paths in a multi-dimensional movement which covers and describes the complete contours of the otoplasty or adaptive earpiece or their parts.

28. Method in accordance with one of the claims 1 to 15 characterized by the following process steps:
Conversion of the thus optimized computer model of the otoplasty or adaptive earpiece into a continuous or discontinuous sequence of control signals for following one or more paths in space in such a way that the sum of all paths forms a network, spiral or other polygon which describes the body of the otoplasty or adaptive earpiece or their parts on all sides;
use of these control signals for multi-dimensional control of the position of an extrusion nozzle along a three-dimensional path for extrusion onto a surface of a liquid or pasty synthetic resin which hardens at least partially relatively quickly in a movement which covers and describes the complete contours of the otoplasty or adaptive earpiece.

29. Method in accordance with claims 28, characterized in that the nozzle is kept stationary, that a platform with controllable movements is used to build up the otoplasty or adaptive earpiece, and that the three-dimensional coordinates of the computer model are used for a computer-controlled movement of the controlled-movement platform along the specified paths in a multi-dimensional movement sequence.

30. Method in accordance with claims 28 to 29, characterized in that the movement of the nozzle or platform takes place with six degrees of freedom.

31. Method in accordance with claims 28 to 30, characterized in that an activated acrylic resin is used as the synthetic resin.

32. Method in accordance with one of claims 1 to 15 characterized by the following process steps:
Manual, interactive or automatic definition of a section or of several plane or curved sections which divide the computer model of the otoplasty or adaptive earpiece into two or more parts which can be produced individually by removal of material;
generation of control signals for a material removing device to control the movement of such a device and separation of a block made of plastic which encloses the contour of the otoplasty or adaptive earpiece on all sides into the determined number of part-blocks
and
removal of material from the part-blocks on all sides in order to produce corresponding parts of the otoplasty or adaptive earpiece and subsequent joining of these parts.

33. Method in accordance with claim 32, characterized in that the position and form of the cutting planes are optimized to achieve the smallest number of part-blocks and the most simple and practical way of material removal.

34. Method in accordance with claims 32 or 33, characterized in that a so-called Eximer laser operating in the ultraviolet range is used to remove material from the individual part-blocks.

35. Method in accordance with claims 32 to 34, characterized in that the individual parts of the otoplasty or adaptive earpiece are provided with suitable grooves, tongues, bores, pegs, stepped edges or similar for later permanent assembly by glueing, polymerization or heat treatment.

36. Method in accordance with claims 32 to 34, characterized in that engageable connecting parts such as pegs and bores and bores for screws, locating springs or similar are produced in computer-controlled production of the parts for detachable connection of the individual parts of the otoplasty or adaptive earpiece.

37. Method for computer-controlled removal of material from a selected block or selected blocks to reduce the external contours of the otoplasty or adaptive earpiece in accordance with one of claims 1 to 15, characterized by the following process steps:
Storage of a set or several sets of definitions, dimensions and positions in a data base of all necessary functions/components of already prefabricated otoplasties or adaptive earpieces which are embedded in plastic blocks and where only the internal contours are predefined;
manual, interactive or automatic optimization of the outer surface of the computer model or adaptive earpiece with respect to the position within a selected block to achieve the minimum final dimensions and an optimum cosmetic appearance.

38. Method in accordance with claim 37, characterized in that a so-called Eximer laser operating in the ultraviolet range is used for removal of the material from the selected block or selected blocks.

## Revendications

1. Procédé de réalisation par commande informatisée d'otoplasties ou de pièces d'ajustement otiques adaptées individuellement aux contours du conduit auditif, composées d'une seule pièce ou de plusieurs pièces façonnables séparément, par saisie directe ou indirecte des contours intérieurs du conduit auditif, par exemple par la réalisation d'une empreinte de l'oreille, et transformation des valeurs ainsi obtenues en une représentation numérique, caractérisé par la transformation de cette représentation numérique des contours du conduit auditif en un modèle de calcul multidimensionnel, préférentiellement tridimensionnel, des contours extérieurs de l'otoplastie ou de la pièce d'ajustement otique avec
choix des différents éléments constitutifs/fonctions pour l'intérieur du modèle de calcul avec détermination simultanée de l'épaisseur de paroi et optimisation des positions des éléments constitutifs/fonctions en vue d'un fonctionnement optimal et d'un encombrement minimal dans cet intérieur, puis réalisation, par commande informatisée, de l'otoplastie ou de la pièce d'ajustement otique à partir des données ainsi déterminées de la représentation informatisée tridimensionnelle optimisée de l'otoplastie ou de la pièce d'ajustement otique.

2. Procédé selon la revendication 1, caractérisé en ce qu'une saisie directe des contours intérieurs du conduit auditif est effectuée par exploration sans contact à l'aide d'ultrasons.

3. Procédé selon la revendication 1, caractérisé en ce qu'une saisie indirecte des contours intérieurs du conduit auditif est effectuée, après prélèvement d'une empreinte de l'oreille, par l'exploration non destructive de cette empreinte de l'oreille avec un rayonnement traversant celle-ci, et en ce que les valeurs ainsi déterminées sont numérisées et mises en mémoire sous forme numérique.

4. Procédé selon la revendication 3, caractérisé en ce que l'exploration des contours de l'empreinte de l'oreille est effectuée par rayonnement X.

5. Procédé selon la revendication 3, caractérisé en ce que l'exploration des contours de l'empreinte de l'oreille est effectuée à l'aide d'ultrasons.

6. Procédé selon la revendication 1, caractérisé en ce que l'empreinte de l'oreille est découpée par étapes successives en fines couches et en ce que les dimensions de ces fines couches sont saisies, converties numériquement et mises en mémoire sous forme numérique.

7. Procédé selon la revendication 6, caractérisé en ce qu'une faible quantité de la matière composant l'empreinte de l'oreille est enlevée par étapes successives, en ce que la surface ainsi obtenue est ensuite saisie, par exemple à l'aide d'une caméra vidéo, et en ce que les valeurs de la surface ainsi saisies sont numérisées et mises en mémoire sous forme numérique.

8. Procédé selon la revendication 7, caractérisé en ce que l'empreinte de l'oreille est incorporée dans un bloc de résine synthétique au coloris contrastant, par exemple noir, en ce que le bloc ainsi obtenu est découpé par étapes successives en fines couches, et en ce que les dimensions de ces fines couches sont saisies, converties numériquement et mises en mémoire sous forme numérique.

9. Procédé selon la revendication 8, caractérisé en ce que les dimensions des coupes consécutives du bloc contenant l'empreinte de l'oreille sont saisies de manière non destructive par exploration des coupes à l'aide d'un rayonnement traversant le bloc ou réfléchi sur les surfaces en contraste des contours de l'empreinte de l'oreille, et en ce que les valeurs ainsi déterminées sont numérisées et mises en mémoire sous forme numérique.

10. Procédé selon l'une quelconque des revendications 1 à 9, caractérisé en ce que la transformation de la représentation numérique des contours du conduit auditif en une représentation tridimensionnelle de l'otoplastie ou de la pièce d'ajustement otique s'effectue de sorte que les contours soient transférés dans un nombre très élevé mais fini d'éléments finis, par ex. sous la forme de très petits triangles ou autres polygones dans l'espace tridimensionnel délimité par le réseau formé par ces éléments.

11. Procédé selon l'une quelconque des revendications 1 à 9, caractérisé en ce que les contours du modèle tridimensionnel de l'otoplastie ou de la pièce d'ajustement otique sont transférés dans un nombre de courbes tridimensionnelles différenciables ou partiellement différenciables.

12. Procédé selon l'une quelconque des revendications 1 à 11, caractérisé en ce que les différents éléments constitutifs/fonctions sont placés ou entrés manuellement dans l'intérieur de la représentation tridimensionnelle du modèle de calcul de l'otoplastie ou de la pièce d'ajustement otique par l'intermédiaire d'une représentation sur un écran d'ordinateur.

13. Procédé selon l'une quelconque des revendications 1 à 11, caractérisé en ce que cette entrée assistée par ordinateur avec optimisation simultanée des surfaces intérieures et de leur distance optimale par rapport à la surface extérieure de l'otoplastie ou de la pièce d'ajustement otique s'effectue avec optimisation simultanée des positions/dimensions des éléments constitutifs/fonctions.

14. Procédé selon l'une quelconque des revendications 1 à 11, caractérisé en ce que la disposition des éléments constitutifs/fonctions et l'ensemble de l'optimisation sont commandés par l'ordinateur, de manière entièrement automatique.

15. Procédé selon l'une au moins des revendications 12 ou 13, caractérisé en ce que la représentation tridimensionnelle du modèle de calcul de l'otoplastie ou de la pièce d'ajustement otique est transformée en une représentation bidimensionnelle sur écran qui, observée avec des verres polarisants, donne l'impression d'une représentation tridimensionnelle.

16. Procédé selon l'une quelconque des revendications 1 à 15, caractérisé par les autres opérations suivantes:
Réalisation d'une représentation informatisée d'une suite de coupes transversales en une ou plusieurs parties du modèle de calcul;
Constitution de l'otoplastie existant sous forme de représentation informatisée ou de la pièce d'ajustement otique par production physique répétée de couches en une ou plusieurs parties et constitution progressive de celles-ci par superposition de telles couches, ainsi que
retouche de l'otoplastie finie en une ou plusieurs parties ou de la pièce d'ajustement otique après durcissement par lissage des surfaces, polissage, suppression des appuis, le cas échéant assemblage des différentes parties de l'otoplastie ou de la pièce d'ajustement otique et le cas échéant fixation des éléments constitutifs.

17. Procédé selon la revendication 16, caractérisé par les opérations suivantes:
Transformation de la succession de coupes transversales en une succession continue ou discontinue de signaux de commande;
Utilisation de ces signaux de commande pour la commande d'un rayon laser focalisé et d'une plate-forme mobile commandable;
Utilisation d'un récipient rempli de résine synthétique liquide activée, disposé sur la plate-forme mobile commandée pour la réalisation de l'otoplastie ou de la pièce d'ajustement otique ou de parties de celles-ci par le rayon laser focalisé effectuant un mouvement commandé continu ou discontinu pour la constitution continue ou discontinue de l'otoplastie ou de la pièce d'ajustement otique par la polymérisation locale, au moins partielle, de portions de surfaces bidimensionnelles de la résine synthétique.

18. Procédé selon la revendication 16, caractérisé par les opérations suivantes:
Transformation du modèle de calcul optimisé en une succession continue ou discontinue de signaux de commande;
Utilisation de ces signaux de commande pour la commande multidimensionnelle de la position d'une buse d'injection et d'une plate-forme mobile commandable pour la réalisation continue ou discontinue de la forme complète de l'otoplastie ou de la pièce d'ajustement otique ou des parties de celles-ci;
Utilisation d'un récipient rempli de résine synthétique liquide passivée disposé sur la plate-forme mobile commandable;
Injection d'un activateur par la buse commandée animée d'un mouvement continu ou discontinu pour la réalisation de l'otoplastie ou de la pièce d'ajustement otique ou des parties de celles-ci, dans la résine synthétique liquide, sous chauffage aux UV ou rayonnement thermique permanent pour une constitution continue ou discontinue de l'otoplastie ou de la pièce d'ajustement otique ou de parties de celles-ci à partir de la résine synthétique polymérisée au moins en partie suite à l'injection de l'activateur.

19. Procédé selon la revendication 18, caractérisé en ce que de la chaleur est apportée au moins au point d'injection en plus de l'apport ciblé de l'activateur par injection.

20. Procédé selon la revendication 19, caractérisé en ce que la chaleur est apportée sous la forme d'un rayonnement infrarouge dirigé ou diffus.

21. Dispositif selon la revendication 18, caractérisé en ce qu'un rayonnement ultraviolet essentiellement constant est également appliqué.

22. Procédé selon la revendication 16, caractérisé en ce que les couches par exemple partiellement polymérisées ainsi réalisées, composées d'une matière plastique, sont placées l'une sur l'autre et assemblées fermement entre elles par collage, polymérisation, par l'application de chaleur et/ou de rayonnement ultraviolet.

23. Procédé selon la revendication 22, caractérisé par les autres opérations suivantes:
Transformation du modèle de calcul numérique tridimensionnel optimisé en une succession de signaux de commande pour la commande répétée d'un dispositif d'extraction pour l'application de couches successives d'une masse de matière plastique durcissable d'après les modèles des plans des coupes transversales sur une surface plane avec, à chaque fois, durcissement partiel des différentes couches;
Empilement des couches les unes sur les autres et durcissement de la pile finie pour la formation d'une otoplastie ou d'une pièce d'ajustement otique
et
retouche des otoplasties ou des pièces d'ajustement otiques ainsi réalisées après durcissement.

24. Procédé selon la revendication 23, caractérisé par les autres opérations suivantes:
Transformation du modèle de calcul numérisé tridimensionnel optimisé en une succession continue ou discontinue de signaux de commande pour la commande répétée d'un dispositif de coupe destiné à découper des coupes transversales successives dans un fin film de plastique ou une fine plaque de plastique;
Empilement des coupes transversales ainsi réalisées l'une sur l'autre pour la formation de l'otoplastie ou de la pièce d'ajustement otique.
Assemblage des coupes transversales entre elles par collage par la chaleur et/ou rayonnement ultraviolet et retouche de l'otoplastie ou de la pièce d'ajustement otique ainsi réalisée.

25. Procédé selon la revendication 24, caractérisé en ce qu'un rayon laser à commande informatisée du déplacement est utilisé comme dispositif de coupe.

26. Procédé selon l'une au moins des revendications 24 ou 25, caractérisé en ce qu'un laser "Eximer" opérant dans la gamme des ultraviolets, à commande informatisée du déplacement, est utilisé comme dispositif de coupe.

27. Procédé selon l'une quelconque des revendications 1 à 15, caractérisé par les opérations suivantes:
Transformation du modèle de calcul optimisé en une séquence continue ou discontinue de signaux de commande pour le suivi d'un ou de plusieurs chemins dans l'espace, de telle sorte que le total de tous les chemins forme un réseau, une spirale ou un polygone qui décrit le corps de l'otoplastie ou de la pièce d'ajustement otique;
Utilisation d'un récipient rempli de résine synthétique polymérisable;
Utilisation de ces signaux de commande pour la commande multidimensionnelle de la position d'une buse d'injection plongeant dans le récipient et servant à l'injection d'un activateur qui, sous les conditions prescrites, après être sorti de la buse, durcit relativement vite, du moins en partie, la résine synthétique
et
guidage de cette buse le long de ces chemins selon un mouvement multidimensionnel englobant et décrivant les contours complets de l'otoplastie ou de la pièce d'ajustement otique ou de leurs parties.

28. Procédé selon l'une quelconque des revendications 1 à 15, caractérisé par les opérations suivantes:
Transformation du modèle de calcul optimisé de l'otoplastie ou de la pièce d'ajustement otique en une succession continue ou discontinue de signaux de commande pour le suivi d'un ou de plusieurs chemins dans l'espace, de sorte que le total de tous les chemins forme un réseau, une spirale ou autre polygone qui décrit le corps de l'otoplastie ou de la pièce d'ajustement otique ou de parties de celles-ci, ce de tous côtés;
Utilisation de ces signaux de commande pour la commande multidimensionnelle de la position d'une buse d'extrusion le long d'une trajectoire tridimensionnelle pour l'extrusion d'une résine synthétique liquide ou pâteuse durcissant relativement vite, au moins partiellement, sur un support, suivant un mouvement englobant et décrivant l'ensemble des contours de l'otoplastie ou de la pièce d'ajustement otique.

29. Procédé selon la revendication 28, caractérisé en ce que la buse est fixe, qu'une plate-forme mobile commandable est prévue pour la constitution de l'otoplastie ou de la pièce d'ajustement otique, et que le déplacement à commande informatisée de la plate-forme mobile commandable le long des chemins indiqués suivant un mouvement multidimensionnel est effectué d'après les coordonnées tridimensionnelles du modèle de calcul.

30. Procédé selon l'une et l'autre des revendications 28 et 29, caractérisé en ce que le déplacement de la buse ou de la plate-forme s'effectue suivant six degrés de liberté.

31. Procédé selon l'une quelconque des revendications 28 à 30, caractérisé en ce que la résine synthétique utilisée est une résine acrylique activée.

32. Procédé selon l'une quelconque des revendications 1 à 15, caractérisé par les opérations suivantes:
Définition manuelle, interactive ou automatique d'une surface de coupe ou de plusieurs surfaces de coupe planes ou courbes, qui subdivisent le modèle de calcul de l'otoplastie ou de la pièce d'ajustement otique en deux parties ou plus réalisables en tant que telles par enlèvement de matière.
Production de signaux de commande pour un dispositif d'enlèvement de matière, destinés à commander le déplacement d'un tel dispositif et à subdiviser un bloc en matière plastique englobant les contours de l'otoplastie ou de la pièce d'ajustement otique de tous côtés en un nombre déterminé de sous-blocs
et
enlèvement de tous côtés de la matière des sous-blocs pour la réalisation des parties correspondantes de l'otoplastie ou de la pièce d'ajustement otique
et
assemblage consécutif de ces parties.

33. Procédé selon la revendication 32, caractérisé en ce que la position et la forme des surfaces de séparation sont optimisées en vue du plus faible nombre possible de sous-blocs et du mode d'enlèvement de matière le plus simple et le plus pratique.

34. Procédé selon l'une au moins des revendications 32 ou 33, caractérisé en ce que l'enlèvement de matière des différents sous-blocs est effectué par un laser "Eximer" opérant dans la gamme des ultraviolets.

35. Procédé selon l'une quelconque des revendications 32 à 34, caractérisé en ce que les différentes parties de l'otoplastie ou de la pièce d'ajustement otique sont munies, pour l'assemblage permanent ultérieur par collage, polymérisation ou traitement thermique, de rainures, ressorts, alésages, tenons, bords étagés ou autres adaptés à cet effet.

36. Procédé selon l'une quelconque des revendications 32 à 34, caractérisé en ce que sont réalisés, lors de la réalisation par commande informatisée des parties, des pièces de liaison enfichables, telles des tenons et des alésages, de même que des taraudages pour des vis, des ressorts à cran d'arrêt ou autres, permettant d'assembler et de séparer les différentes parties de l'otoplastie ou de la pièce d'ajustement otique.

37. Procédé d'enlèvement à commande informatisée de la matière d'un bloc sélectionné ou de blocs sélectionnés pour la réalisation des contours extérieurs de l'otoplastie ou de la pièce d'ajustement otique suivant l'une quelconque des revendications 1 à 15, caractérisé par les opérations suivantes:
Mise en mémoire, dans une banque de données, d'un ou de plusieurs articles de définitions, dimensions et positions de toutes les fonctions/éléments constitutifs nécessaires d'otoplasties ou de pièces d'ajustement otiques déjà préfabriquées, incorporées dans des blocs de matière plastique, dont seuls les contours intérieurs sont spécifiés;
Optimisation manuelle, interactive ou automatique de la surface extérieure du modèle de calcul ou de la pièce d'ajustement otique quant à la position à l'intérieur d'un bloc sélectionné en vue de dimensions finales aussi réduites que possible et d'une présentation esthétique optimale.

38. Procédé selon la revendication 37, caractérisé en ce que l'enlèvement de matière du bloc sélectionné ou des blocs sélectionnés est effectué avec un laser "Eximer" opérant dans la gamme des ultraviolets.
